# EUROPEAN PATENT APPLICATION

(11) **EP 2 991 403 A2**
(43) Date of publication of application: **02.03.2016**
(21) Application number: 13807116.2
(22) Date of filing: 16.08.2013
(51) Int. Cl.: H04W 36/18

(54) **METHOD FOR IMPLEMENTING SOFT HANDOVER BASED ON CARRIER AGGREGATION TECHNOLOGY, BASE STATION, AND TERMINAL**

(30) Priority: 30.05.2013 CN 201310212884
(71) Applicant: ZTE Corporation, Shenzhen, Guangdong 518057 (CN)
(72) Inventor: WEN, Yongming, Shenzhen Guangdong 518057 (CN)
(74) Representative: Awapatent AB
(86) International application number: PCT/CN2013/081604
(87) International publication number: WO 2013/189340

(57) **Abstract**

A method for implementing soft handover based on a carrier aggregation technology, a base station and a terminal are disclosed. The method is applied in a scenario of complementary carrier coverage, and includes: a terminal and a base station simultaneously receiving and transmitting data through a plurality of cells corresponding to a plurality of member carriers by means of carrier aggregation, wherein one of the plurality of cells is a primary cell, and the rest are secondary cells; according to a measurement result of the terminal, the base station determining to switch one of the secondary cells to be the primary cell of the terminal, and marking the one of the secondary cells as a target secondary cell; and the base station maintaining a service connection between the terminal and the target secondary cell, and notifying the terminal to hand over a control signaling connection to the target secondary cell.

## Description

### Technical Field

The present invention relates to the field of communication, and particularly, to a method for implementing soft handover based on a carrier aggregation technology, a base station, and a terminal.

### Background of the Related Art

Carrier aggregation is one of the key technologies of the Long Term Evolution-Advanced (LTE-A). The carrier aggregation is to implement a wider transmission carrier bandwidth, thereby implementing a higher data transmission rate, by aggregating carriers on different frequency bands to simultaneously transmit data to a certain terminal.

In the carrier aggregation technology, a primary cell plays a master control role. The primary cell adds or deletes a secondary cell through a signaling control terminal of a Radio Resource Control (RRC) layer, and activates or deactivates a secondary cell through a signaling control terminal of a Media Access Control (MAC) layer, and it also has a service connection with the terminal. There is only a service connection but not control signaling connection between the secondary cell and the terminal. The Release 10 (R10) standard provides that the terminal can simultaneously communicate with one primary cell and at most four secondary cells. The R10 standard provides that a handover can only be performed between primary cells. When the handover occurs in a primary cell, firstly the primary cell is released and all secondary cells are deactivated, and then a new primary cell is connected and other secondary cells are activated, and all the secondary cells are required to be deactivated, that is, all the secondary cells are temporarily closed. Therefore, when the handover is performed, the terminal is required to disconnect from a source cell firstly, and then it can establish a connection with a target cell, and this is a mechanism of hard handover. Since there is a brief time period during the hard handover that the terminal does not establish the connection with both the source cell and the target cell, so that the LTE-A standard cannot excessively depend on the reliability of the hard handover either, it has to increase a hard handover back-off mechanism; and if the handover from the terminal to the target cell fails, it promptly returns back to the source cell.

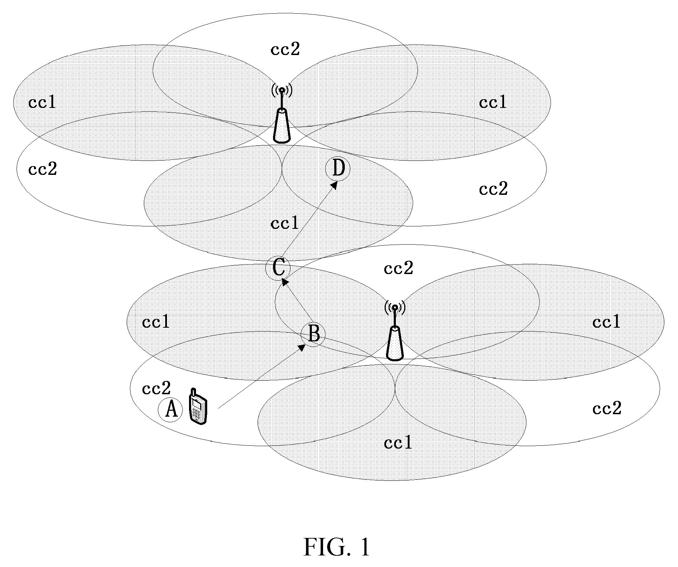

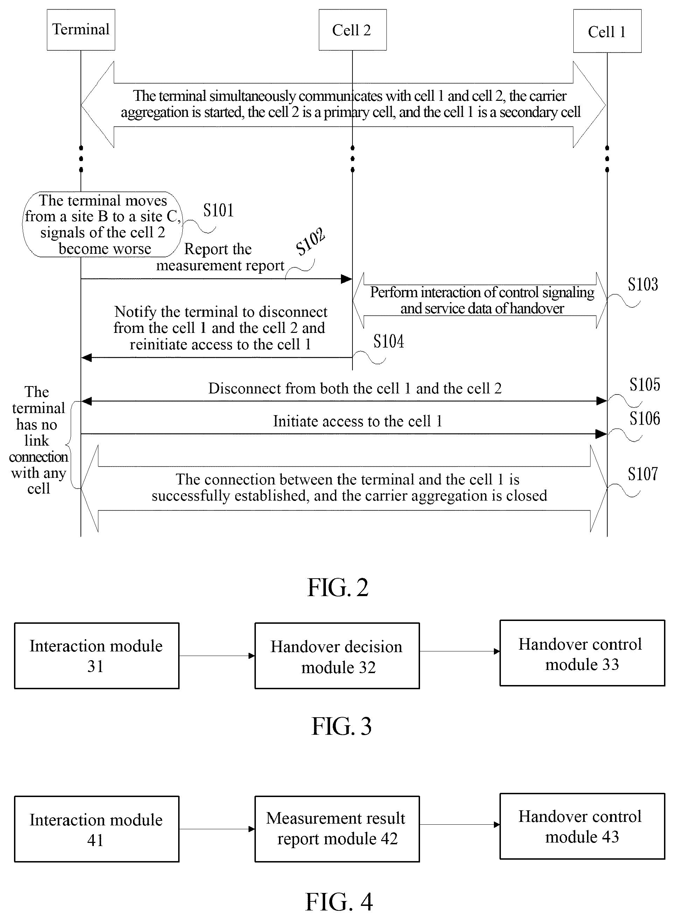

In the LTE-A standard, four typical carrier aggregation application scenarios are defined. Wherein, the third application scenario is used for reducing cell-edge effect (refer to FIG. 1): two member carriers 1 and 2 are deployed within the same base station, and with regard to each member carrier, the base station adopts the three-cell coverage, and each cell covers 120 degrees. An antenna of the second member carrier points to an edge of the first member carrier, so that a cell edge of one of the two member carriers is located at a cell center of the other member carrier, and therefore, when the terminal is located at the cell edge, it can simultaneously communicate with the two carriers by using the carrier aggregation technology, which can improve the rate of the terminal at the cell edge, and eliminate the edge effect. For example, when the terminal moves according to the four sites A, B, C and D in the figure, and when the terminal is at the site A at the beginning, it is located in the single coverage area of the member carrier 1, and the carrier aggregation cannot be performed. When the terminal moves to the site B, it is located in a common coverage area of the member carriers 1 and 2, and the carrier aggregation can be performed. Under the control of the base station, a cell 1 in which the member carrier 2 is located is added as a secondary cell, and a cell 2 is a primary cell. When the terminal moves toward the site C, signals of the cell 2 become worse, and under the control of the base station, the cell 1 is changed to the primary cell, and the cell 2 is changed to the secondary cell. When the terminal moves to the site C, the base station controls the terminal to stop using the cell 2, thereby stopping performing carrier aggregation. When the terminal moves to the site D, it is located in the common coverage area of the member carriers 1 and 2 again, thus carrier aggregation can be performed again. In the scenario, the terminal is located in the site B in FIG. 1, and the terminal simultaneously communicates with the cell 1 and the cell 2 at this point. The cell 2 is the primary cell, the cell 1 is the secondary cell, and a carrier aggregation service is started. When the terminal moves from the site B to the site C, as shown in FIG. 2, the flow of performing hard handover with the carrier aggregation technology in an LTE-A network includes the following steps.

In step 5101, the terminal moves from the site B to the site C, and with the movement of the terminal, the signals of the cell 2 gradually become worse.

But it is still within the cell 1, thus signals of the cell 1 do not have obvious change.

In step S102, when the signals of the cell 2 get worse to a certain degree, the terminal is triggered to report a measurement report; and the terminal reports a measurement report of signal strengths of the cell 1 and the cell 2 to the base station.

Here the triggering condition can be an A5 event provided in the R10 standard: signals of the primary cell are lower than a threshold 1 and signals of the neighboring cell are higher than a threshold 2.

In step S103, after the base station receives the measurement report reported by the terminal, the cell 2 as the primary cell decides to perform handover, since the signals of the cell 1 are stronger at this point, the cell 1 and the cell 2 internally perform interaction of control signaling and service data of handover to prepare for the handover.

In step S104, after the preparation work is completed, the cell 2 sends a signaling to the terminal, and informs the terminal of disconnecting from the cell 1 and the cell 2 and reinitiating access to the cell 1.

In step S105, after receiving an instruction of the cell 2, the terminal disconnects a communication connection with the cell 1 and the cell 2.

In step S106, the terminal initiates an access request to the cell 1 according to the signaling requirement.

In step S107, the terminal successfully accesses the cell 1, and restores the communication connection with the cell 1.

In the above flow, the terminal has no connection with any one cell from the step S105 to the step S107, and thus it is the hard handover; however, since the terminal has no connection with the base station, events affecting the user experience, such as call drop, increased delay and increased bit error rate, may occur.

### Summary of the Invention

The embodiments of the present invention provide a method for implementing soft handover based on a carrier aggregation technology, a base station, and a terminal, to reduce a call drop rate, delay and bit error rate of the terminal, enhance the handover performance of an LTE-A network, and guarantee services with high QoS requirements.

The embodiments of the present invention provide a method for implementing soft handover based on a carrier aggregation technology, applied in a scenario of complementary carrier coverage, comprising:
a terminal and a base station simultaneously receiving and transmitting data through a plurality of cells corresponding to a plurality of member carriers by means of carrier aggregation, wherein one of the plurality of cells is a primary cell, and the rest cells are secondary cells;
according to a measurement result of the terminal, the base station determining to switch one of the secondary cells to be the primary cell of the terminal, and marking the one of the secondary cells as a target secondary cell; and
the base station maintaining a service connection between the terminal and the target secondary cell, and notifying the terminal to hand over a control signaling connection to the target secondary cell.

Alternatively, the base station notifying the terminal to hand over the control signaling connection to the target secondary cell comprises:
the base station sending a signaling message of establishing a control signaling link with the target secondary cell to the terminal, wherein, the signaling message carries connection parameter information required for establishing the control signaling link with the target secondary cell; and
the terminal establishing the control signaling link with the target secondary cell according to the connection parameter information.

Alternatively, the terminal establishing the control signaling link with the target secondary cell according to the connection parameter information comprises:
the terminal configuring control layer of the terminal according to the connection parameter information, to synchronize with the target secondary cell; and notifying the target secondary cell that a reconfiguration has been performed according to connection parameters of the target secondary cell through the signaling message.

Alternatively, the method further comprises:
after completing an establishment of the control signaling link with the target secondary cell, the terminal disconnecting signaling connection with the primary cell while maintaining a service connection; or simultaneously disconnecting the signaling connection and the service connection with the primary cell.

Alternatively, according to the measurement result of the terminal, the base station determining to switch one of the secondary cells to be the primary cell of the terminal, and marking the one of the secondary cells as a target secondary cell, comprises:
when signal strength of the primary cell and signal strength of a certain secondary cell meet a handover condition, the base station receiving a measurement result of signals of the primary cell and the secondary cell reported by the terminal, wherein, the measurement result of the signals contains the signal strength of the primary cell and the signal strength of the secondary cell; and
according to the measurement result of the signals of the primary cell and the secondary cell reported by the terminal, the base station switching the secondary cell to be the primary cell of the terminal, and marking the secondary cell as the target secondary cell.

The embodiments of the present invention also provide a base station, applied in a scenario of complementary carrier coverage, comprising:
an interaction module, configured to: simultaneously receive and transmit data through a plurality of cells corresponding to a plurality of member carriers by means of carrier aggregation with a terminal, wherein one of the plurality of cells is a primary cell, and the rest cells are secondary cells;
a handover decision module, configured to: according to a measurement result of the terminal, determine to switch one of the secondary cells to be the primary cell of the terminal, and mark the one of the secondary cells as a target secondary cell; and
a handover control module, configured to: maintain a service connection between the terminal and the target secondary cell, and notify the terminal to hand over a control signaling connection to the target secondary cell.

Alternatively, the interaction module is further configured to: when signal strength of the primary cell and signal strength of a certain secondary cell meet a handover condition, receive a measurement result of signals of the primary cell and the secondary cell reported by the terminal, wherein, the measurement result of the signals contains the signal strength of the primary cell and the signal strength of the secondary cell;
the handover decision module is configured to, according to the measurement result of the terminal, determine to switch one of the secondary cells to be the primary cell of the terminal, and mark the one of the secondary cells as the target secondary cell by means of:
according to the measurement result of the signals of the primary cell and the secondary cell reported by the terminal, switching the secondary cell to be the primary cell of the terminal, and marking the secondary cell as the target secondary cell.

Alternatively, the handover control module is configured to notify the terminal to hand over the control signaling connection to the target secondary cell by means of:
sending a signaling message of establishing a control signaling link with the target secondary cell to the terminal, wherein, the signaling message carries connection parameter information required for establishing the control signaling link with the target secondary cell.

The embodiments of the present invention further provide a terminal, applied in a scenario of complementary carrier coverage, comprising:
an interaction module, configured to: simultaneously receive and transmit data through a plurality of cells corresponding to a plurality of member carriers by means of carrier aggregation with a base station, wherein one of the plurality of cells is a primary cell, and the rest cells are secondary cells;
a measurement result report module, configured to: when signal strength of the primary cell and signal strength of a certain secondary cell meet a handover condition, report a measurement result of signals of the primary cell and the secondary cell to the base station, wherein the measurement result of the signals contains the signal strength of the primary cell and the signal strength of the secondary cell; and
a handover control module, configured to: after receiving a signaling message of handing over a control signaling connection to a target secondary cell from the base station, maintain a service connection with the target secondary cell, and establish a control signaling link with the target secondary cell.

Alternatively, the handover control module is configured to establish the control signaling link with the target secondary cell after receiving the signaling message of handing over the control signaling connection to the target secondary cell from the base station by means of:
receiving the signaling message of handing over the control signaling connection to the target secondary cell from the base station, wherein, the signaling message carries connection parameter information required for establishing the control signaling link with the target secondary cell; and
configuring control layer of the terminal according to the connection parameter information, to synchronize with the target secondary cell; and notifying the target secondary cell that a reconfiguration has been performed according to connection parameters of the target secondary cell through the signaling message.

Alternatively, the handover control module is further configured to: after completing an establishment of the control signaling link with the target secondary cell, disconnect a signaling connection with the primary cell while maintaining a service connection; or simultaneously disconnect the signaling connection and the service connection with the primary cell.

In the method for implementing soft handover based on the carrier aggregation technology, the base station and the terminal provided in the embodiments of the present invention, minor modifications are made to the related art, and the embodiments of the present invention borrow the concepts of primary cell and secondary cell of the carrier aggregation technology and the processes such as triggering and execution of the hard handover in the LTE-A network based on the carrier aggregation technology in the LTE-A network. The difference is just that the previous method of firstly releasing the primary cell and deactivating all the secondary cells and then connecting a new primary cell and activating other secondary cells is not used in the handover process any more, but the service connection is maintained in the handover process, and only a control right of the primary cell, namely, the signaling control connection, is altered, thus it can be compatible with the related art to the greatest extent, and is implemented more conveniently. The soft handover is implemented using the method, base station and terminal provided in the embodiments of the present invention, which has higher reliability, lower delay, lower bit error rate, etc. than the hard handover, thereby greatly enhancing the handover performance of the LTE-A network, and guaranteeing services with high QoS requirements.

### Brief Description of Drawings

FIG. 1 is a schematic diagram of the third application scenario defined in the LTE-A standard.
FIG. 2 is a flow chart of performing hard handover with the carrier aggregation technology in the LTE-A network.
FIG. 3 is a structure chart of a base station for implementing soft handover based on the carrier aggregation technology in one embodiment of the present invention.
FIG. 4 is a structure chart of a terminal for implementing soft handover based on the carrier aggregation technology in one embodiment of the present invention.
FIG. 5 is a flow chart of a method for implementing soft handover based on the carrier aggregation technology in one embodiment of the present invention.
FIG. 6 is a flow chart of performing soft handover with the carrier aggregation technology in the LTE-A network in one application example of the present invention.

### Preferred Embodiments of the Invention

The embodiments of the present invention will be described in detail in combination with the accompanying drawings below. It should be noted that the embodiments in the present invention and the features in the embodiments can be optionally combined with each other in the case of no conflict.

As shown in FIG. 3, this embodiment provides a base station for implementing soft handover based on the carrier aggregation technology, applied in a scenario of complementary carrier coverage, comprising:
an interaction module 31, used for: simultaneously receiving and transmitting data through a plurality of cells corresponding to a plurality of member carriers by means of carrier aggregation with a terminal, wherein one of the plurality of cells is a primary cell, and the rest cells are secondary cells;
a handover decision module 32, used for: according to a signal measurement result of the terminal, determining to switch one of the secondary cells to be the primary cell of the terminal, and marking the one of the secondary cells as a target secondary cell; and
a handover control module 33, used for: maintaining a service connection with the target secondary cell, and notifying the terminal to hand over a control signaling connection to the target secondary cell.
Wherein, the interaction module 31 is also used for: when the signal strength of the primary cell and the signal strength of a certain secondary cell meet a handover condition, receiving a measurement result of signals of the primary cell and the secondary cell reported by the terminal, wherein, the measurement result of the signals contains the signal strength of the primary cell and the signal strength of the secondary cell;
the handover decision module 32 is used for, according to the measurement result of the terminal, determining to switch one of the secondary cells to be the primary cell of the terminal, and marking the one of the secondary cells as the target secondary cell by means of:
   according to the measurement result of the signals of the primary cell and the secondary cell reported by the terminal, switching the secondary cell to be the primary cell of the terminal, and marking the secondary cell as the target secondary cell.

Wherein, the handover control module 33 is used for notifying the terminal to hand over the control signaling connection to the target secondary cell by means of:
the handover control module 33 sending a signaling message of establishing a control signaling link with the target secondary cell to the terminal, wherein, the signaling message carries connection parameter information required for establishing the control signaling link with the target secondary cell.

As shown in FIG. 4, this embodiment provides a terminal for implementing soft handover based on the carrier aggregation technology, applied in a scenario of complementary carrier coverage, comprising:
an interaction module 41, used for: simultaneously receiving and transmitting data through a plurality of cells corresponding to a plurality of member carriers by means of carrier aggregation with a base station, wherein one of the plurality of cells is a primary cell, and the rest cells are secondary cells;
a measurement result report module 42, used for: when the signal strength of the primary cell and the signal strength of a certain secondary cell meet a handover condition, reporting a measurement result of signals of the primary cell and the secondary cell to the base station, wherein, the measurement result of the signals contains the signal strength of the primary cell and the signal strength of the secondary cell; and
a handover control module 43, used for: after receiving a signaling message of handing over a control signaling connection to a target secondary cell from the base station, maintaining the service connection with the target secondary cell, and establishing a control signaling link with the target secondary cell.

Wherein, the handover control module 43 is used for establishing the control signaling link with the target secondary cell after receiving the signaling message of handing over the control signaling connection to the target secondary cell from the base station by means of:
the handover control module 43 receiving the signaling message of handing over the control signaling connection to the target secondary cell from the base station, wherein, the signaling message carries the connection parameter information required for establishing the control signaling link with the target secondary cell; and
the handover control module 43 configuring a control layer of the terminal according to the connection parameter information, to synchronize with the target secondary cell; and notifying the target secondary cell that a reconfiguration has been performed according to connection parameters of the target secondary cell through the signaling message.

Wherein, the handover control module 43 is also used for: after completing an establishment of the control signaling link with the target secondary cell, disconnecting a signaling connection with the primary cell while maintaining a service connection; or simultaneously disconnect the signaling connection and the service connection with the primary cell.

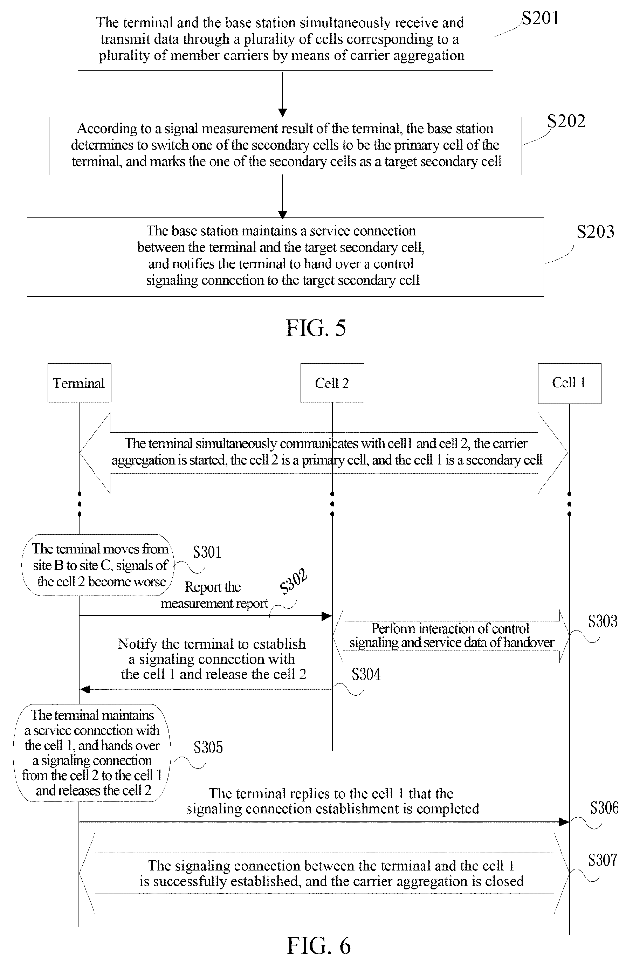

As shown in FIG. 5, this embodiment provides a method for implementing soft handover based on the carrier aggregation technology, comprising the following steps:
In step S201, the terminal and the base station simultaneously receive and transmit data through a plurality of cells corresponding to a plurality of member carriers by means of carrier aggregation; wherein one of the plurality of cells is a primary cell, and the rest cells are secondary cells.
In step S202, according to a signal measurement result of the terminal, the base station determines to switch one of the secondary cells to be the primary cell of the terminal, and marks the one of the secondary cells as a target secondary cell.

When the signal strength of the primary cell and the signal strength of a certain secondary cell meet the handover condition, for example, when signals of a certain secondary cell become good enough or signals of the primary cell become very poor, the terminal reports a measurement result of the signals of the primary cell and the secondary cell to the base station, the measurement result of the signals contains the signal strength of the primary cell and the signal strength of the secondary cell.

In step S203, the base station maintains a service connection between the terminal and the target secondary cell, and notifies the terminal to hand over a control signaling connection to the target secondary cell.

In the step S203, the base station sends a signaling message of establishing a control signaling link with the target secondary cell to the terminal, wherein, the signaling message carries connection parameter information required for establishing the control signaling link with the target secondary cell; and
the terminal establishes the control signaling link with the target secondary cell according to the connection parameter information.

Wherein, the terminal establishing the control signaling link with the target secondary cell according to the connection parameter information, comprises:
the terminal configuring the control layer of the terminal according to the connection parameter information, to synchronize with the target secondary cell; and notifying the target secondary cell that a reconfiguration has been performed according connection parameters of the target secondary cell through the signaling message.

The secondary cell is changed to the primary cell, and the original primary cell is changed to the secondary cell; and meanwhile other secondary cells still remain unchanged. Thus the soft handover is implemented.

After the step S203, after completing the establishment of the control signaling link with the secondary cell, the terminal disconnects the signaling connection with the primary cell; or disconnects the signaling connection and the service connection with the primary cell.

Therefore, in the whole handover process, the terminal maintains the service connection with at least one cell, and just the control signaling connection is handed over from the original primary cell to a certain secondary cell with stronger signals, implementing the soft handover.

In one application example, taking the third application scenario defined in the LTE-A standard shown in FIG. 1 as an example, two member carriers are in complementary coverage in this scenario, after the carrier aggregation technology is introduced, both the base station and the terminal have the ability of simultaneously receiving and transmitting data through a plurality of member carriers, and the necessary conditions for the soft handover are objectively possessed, which is very convenient for implementing the soft handover. In this scenario, similar to the related art, the terminal is located at the site B in FIG. 1, and the terminal simultaneously communicates with the cell 1 and the cell 2 at this point. The cell 2 is the primary cell, the cell 1 is the secondary cell, and the carrier aggregation service is started. When the terminal moves from the site B to the site C, as shown in FIG. 6, the flow of performing soft handover with the carrier aggregation technology in the LTE-A network according to this embodiment of the present invention includes the following steps:
Step S301 to step S302 are similar to the step 101 to step 102 in FIG. 2.

In step S303, after the base station receives the measurement report reported by the terminal, the cell 2 as the primary cell decides to perform handover, since signals of the cell 1 are stronger at this point, the cell 1 and the cell 2 internally perform interaction of control signaling and service data of handover, and the cell 2 acquires information such as parameters required for establishing a control signaling connection with the cell 1 to prepare for the handover.

In step S304, after the preparation work is completed, the cell 2 sends a signaling to the terminal, to notify the terminal to hand over a control signaling link of an RRC layer and so on to the cell 1 and disconnecting the service connection and the signaling connection with the cell 2.

In order to help the terminal hand over the signaling control link connection to the cell 1 faster and smoother, the cell 2 can send the related signaling connection parameters of the cell 1 acquired in the step S303 to the terminal. When sending the related signaling to the terminal, the cell 2 can notify the terminal through an RRC Connection Reconfiguration message.

In step S305, after receiving the signaling of the cell 2, the terminal configures its own control layers such as the RRC layer according to the related signaling connection parameters of the cell 1 sent from the cell 2, to synchronize with the cell 1.

The terminal maintains the service connection with the cell 1, and hands over the signaling connection from the cell 2 to the cell 1, and at this point, the terminal is in the process of establishing the signaling connection with the cell 1, and still does not disconnect the signaling connection with the cell 2.

In step S306, the terminal sends the signaling message to the cell 1, to notify the cell 1 that it has performed the reconfiguration according to the signaling connection parameters of the cell 1.

The terminal can notify the cell 1 through an RRC Connection Reconfiguration Complete message, and so far, the establishment of the control signaling connection between the terminal and the cell 1 has been completed.

In step S307, after the establishment of the control signaling connection between the terminal and the cell 1 is completed, the signaling with the cell 2 is released according to an instruction of the cell 2.

If the signals of the cell 2 are very poor, the service connection with the cell 2 also can be disconnected; the terminal and the cell 1 can perform signaling message interaction through the signaling connection, and meanwhile the data also can be normally received and transmitted through the service connection between the terminal and the cell 1.

In the above whole process of the soft handover, only the control signaling connection is handed over, and the terminal always maintains the service connection with the cells.

The method, base station and terminal provided in the embodiments not only can be applied in the LTE-A network, but also can be popularized and applied in all broadband mobile communication networks using the carrier aggregation technology such as the Institute of Electrical and Electronic Engineers (IEEE) 802.16m to implement the soft handover.

It can be seen from the above embodiments that, in the method and base station for implementing the soft handover based on the carrier aggregation technology provided in the above embodiments, minor modifications are made to the related art, and the embodiments of the present invention borrow the concepts of primary cell and secondary cell of the carrier aggregation technology and the processes such as triggering and execution of the hard handover in the LTE-A network based on the carrier aggregation technology in the LTE-A network. The difference is just that the previous method of firstly releasing the primary cell and deactivating all the secondary cells and then connecting a new primary cell and activating other secondary cells is not used in the handover process any more, but the service connection is maintained in the handover process, and only a control right of the primary cell, namely, the signaling control connection, is altered, thus it can be compatible with the related art to the greatest extent, and is implemented more conveniently. The soft handover is implemented with the method and base station provided in the embodiments of the present invention, which has higher reliability, lower delay, lower bit error rate, etc. than the hard handover, thereby greatly enhancing the handover performance of the LTE-A network, and guaranteeing services with high QoS requirements.

The ordinary person skilled in the art can understand that all or part of the steps in the above method can be completed by a program instructing related hardware, and the program can be stored in a computer readable memory medium, such as a read-only memory, disk or optical disk. Alternatively, all or part of the steps of the above embodiments also can be implemented by using one or more integrated circuits. Correspondingly, each module/unit in the above embodiments can be implemented in the form of hardware, and also can be implemented in the form of software function module. The embodiments of the present invention are not limited to any combination of hardware and software in a specific form.

The above depiction is only the preferred embodiments of the present invention, which is not used to limit the protection scope of the present invention. According to the summary of the invention of the present invention, it can still have other various embodiments, and the skilled person in the art can make various corresponding changes and transformations according to the embodiments of the present invention without departing from the spirit and essence of the present invention. All the modifications, equivalent substitutions, and improvements, etc., made within the spirit and principle of the present invention shall fall into the protection scope of the present invention.

### Industrial Applicability

The soft handover is implemented with the method, base station and terminal provided in the embodiments of the present invention, which has higher reliability, lower delay, lower bit error rate, etc. than the hard handover, thereby greatly enhancing the handover performance of the LTE-A network, and guaranteeing services with high QoS requirements.

## Claims

1. A method for implementing soft handover based on carrier aggregation technology, applied in a scenario of complementary carrier coverage, comprising:
a terminal and a base station simultaneously receiving and transmitting data through a plurality of cells corresponding to a plurality of member carriers by means of carrier aggregation, wherein one of the plurality of cells is a primary cell, and the rest cells are secondary cells;
according to a measurement result of the terminal, the base station determining to switch one of the secondary cells to be the primary cell of the terminal, and marking the one of the secondary cells as a target secondary cell; and
the base station maintaining a service connection between the terminal and the target secondary cell, and notifying the terminal to hand over a control signaling connection to the target secondary cell.

2. The method according to claim 1, wherein:
the base station notifying the terminal to hand over a control signaling connection to the target secondary cell, comprises:
the base station sending a signaling message of establishing a control signaling link with the target secondary cell to the terminal, wherein, the signaling message carries connection parameter information required for establishing the control signaling link with the target secondary cell; and
the terminal establishing the control signaling link with the target secondary cell according to the connection parameter information.

3. The method according to claim 1, wherein:
the terminal establishing the control signaling link with the target secondary cell according to the connection parameter information, comprises:
the terminal configuring control layer of the terminal according to the connection parameter information, to synchronize with the target secondary cell; and notifying the target secondary cell that a reconfiguration has been performed according to connection parameters of the target secondary cell through the signaling message.

4. The method according to claim 2 or 3, further comprising:
after completing an establishment of the control signaling link with the target secondary cell, the terminal disconnecting signaling connection with the primary cell while maintaining a service connection; or simultaneously disconnecting the signaling connection and the service connection with the primary cell.

5. The method according to claim 1, wherein:
according to the measurement result of the terminal, the base station determining to switch one of the secondary cells to be the primary cell of the terminal, and marking the one of the secondary cells as a target secondary cell, comprises:
when signal strength of the primary cell and signal strength of a certain secondary cell meet a handover condition, the base station receiving a measurement result of signals of the primary cell and the secondary cell reported by the terminal, wherein, the measurement result of the signals contains the signal strength of the primary cell and the signal strength of the secondary cell; and
according to the measurement result of the signals of the primary cell and the secondary cell reported by the terminal, the base station switching the secondary cell to be the primary cell of the terminal, and marking the secondary cell as the target secondary cell.

6. A base station, applied in a scenario of complementary carrier coverage, comprising:
an interaction module, configured to: simultaneously receive and transmit data through a plurality of cells corresponding to a plurality of member carriers by means of carrier aggregation with a terminal, wherein one of the plurality of cells is a primary cell, and the rest cells are secondary cells;
a handover decision module, configured to: according to a measurement result of the terminal, determine to switch one of the secondary cells to be the primary cell of the terminal, and mark the one of the secondary cells as a target secondary cell; and
a handover control module, configured to: maintain a service connection between the terminal and the target secondary cell, and notify the terminal to hand over a control signaling connection to the target secondary cell.

7. The base station according to claim 6, wherein:
the interaction module is further configured to: when signal strength of the primary cell and signal strength of a certain secondary cell meet a handover condition, receive a measurement result of signals of the primary cell and the secondary cell reported by the terminal, wherein, the measurement result of the signals contains the signal strength of the primary cell and the signal strength of the secondary cell;
the handover decision module is configured to, according to the measurement result of the terminal, determine to switch one of the secondary cells to be the primary cell of the terminal, and mark the one of the secondary cells as the target secondary cell by means of:
according to the measurement result of the signals of the primary cell and the secondary cell reported by the terminal, switching the secondary cell to be the primary cell of the terminal, and marking the secondary cell as the target secondary cell.

8. The base station according to claim 6, wherein:
the handover control module is configured to notify the terminal to hand over the control signaling connection to the target secondary cell by means of:
sending a signaling message of establishing a control signaling link with the target secondary cell to the terminal, wherein, the signaling message carries connection parameter information required for establishing the control signaling link with the target secondary cell.

9. A terminal, applied in a scenario of complementary carrier coverage, comprising:
an interaction module, configured to: simultaneously receive and transmit data through a plurality of cells corresponding to a plurality of member carriers by means of carrier aggregation with a base station, wherein one of the plurality of cells is a primary cell, and the rest cells are secondary cells;
a measurement result report module, configured to: when signal strength of the primary cell and signal strength of a certain secondary cell meet a handover condition, report a measurement result of signals of the primary cell and the secondary cell to the base station, wherein the measurement result of the signals contains the signal strength of the primary cell and the signal strength of the secondary cell; and
a handover control module, configured to: after receiving a signaling message of handing over a control signaling connection to a target secondary cell from the base station, maintain a service connection with the target secondary cell, and establish a control signaling link with the target secondary cell.

10. The terminal according to claim 9, wherein:
the handover control module is configured to establish the control signaling link with the target secondary cell after receiving the signaling message of handing over the control signaling connection to the target secondary cell from the base station by means of:
receiving the signaling message of handing over the control signaling connection to the target secondary cell from the base station, wherein, the signaling message carries connection parameter information required for establishing the control signaling link with the target secondary cell; and
configuring control layer of the terminal according to the connection parameter information, to synchronize with the target secondary cell; and notifying the target secondary cell that a reconfiguration has been performed according to connection parameters of the target secondary cell through the signaling message.

11. The terminal according to claim 9, wherein:
the handover control module is further configured to: after completing an establishment of the control signaling link with the target secondary cell, disconnect signaling connection with the primary cell while maintaining service connection; or simultaneously disconnect the signaling connection and the service connection with the primary cell.
